# EUROPÄISCHE PATENTANMELDUNG

(11) **EP 1 731 489 A1**
(43) Veröffentlichungstag der Anmeldung: **13.12.2006**
(21) Anmeldenummer: 06466001.2
(22) Anmeldetag: 03.02.2006
(51) Int. Cl.: C03B 9/447

(54) **Mechanismus des Abnehmers einer Glasformmaschine**

(30) Priorität: 11.02.2005 CZ 20050084
(71) Anmelder: Markus Trading, s.r.o., 463 11 Liberec 30 (CZ)
(72) Erfinder: Mazanek, Petr, 511 01 Turnov (CZ); Roucek, Ervin, 463 11 Liberec 30 (CZ); Vlcek, Jan, 511 01 Turnov (CZ)
(74) Vertreter: Calek, Karel

(57) **Zusammenfassung**

Mechanismus des Abnehmers einer Glasformmaschine mit einem Schwenkarm (52) und einer in der Kreisbahn verschiebbaren und am gegenseitigen Ende des Schwenkarms (52) zur seinen Drehachse aufhängten Zange, wobei dessen Grund ein Kasten (1) ist, an welchen von der Seite ein aus einem Getriebe und Servomotor bestehender Stellantrieb (51) befestigt ist, wobei im niedrigen Teil des Kastens (1) eine Buchse (15) gelagert ist, in welche eine feste Achse (10) des Abnehmerarms (52) mit einer Nabe (16) eingelegt ist, an welche die Zange (32) des Abnehmers in abnehmbarer Weise befestigbar ist, wobei der Austritt des Stellantriebes (51) eine Welle (3) bildet, die ein erstes in das zweite mit dem Abnehmerarm (52) fest verbundenen Zahnrad (17) eingreifendes Zahnrad (5) trägt.

## Beschreibung

Die Erfindung betrifft einen Mechanismus des Abnehmers einer Glasformmaschine, insbesondre Reihenmaschine, wo er zur Übertragung der geformten Glashüllen (Glaskörper) aus der Endform auf die Abstellplatte verwandt ist. Es ist erwünscht, dass diese Übertragung bei den geeigneten kinematischen Verhältnissen durchläuft, welche die Belastung der geformten Glashülle beeinflussen und in derer Folge die Glashülle nicht deformiert ist. Die Übertragung der Glashülle durchläuft gewöhnlich mit der Verschiebung auf einer vertikalen Kreisbahn durch Aufhängung in Zangebacken, die mittels eines Schwenkarmes getragen sind. Die vertikale Stellung der Zange wird gewöhnlich durch Zahngetriebe mit einem Zwischenrad oder durch Zahnriemengetriebe gesichert, wobei das Rad in der Drehachse des Abnehmerarmes mit dieser festen Drehachse fest verbunden ist und das angetriebene Ausgleichsrad mit der Zange fest verbunden ist. Die eigentliche Rotation des Abnehmerarmes ist durch Antrieb eines mit diesem Arm vom Stellantrieb des Mechanismus des Abnehmers fest verbundenen Ritzels gesichert.

Die bisher bekannten neueren Ausführungen der Mechanismen des Abnehmers verwenden zum Antrieb die elektrischen Stellantriebe, die allmählich die gewöhnlich früher verwandten pneumatischen Antriebe - am häufigsten pneumatische Walzen - ersetzt haben. Diese Lösungen nützen eine Programmierungsfähigkeit der kinematischen Parameter von elektrischen Stellantrieben aus, welche die sich erhöhenden Erzeugungsgeschwindigkeiten der Glasformmaschinen und die Minimalisierung der Belastung der geformten Glashüllen bei ihrer unbeendigten Abkühlung sichern können.

Die bisher bekannten Lösungen behalten das ursprüngliche Prinzip dieses Typs des Mechanismus, d.h. einen Schwenkarm mit der Zange, der mit dem Zahngetriebe Zahnstange - Ritzel angetrieben ist, wobei der Vorschub der Zahnstange durch den Stellantrieb über das mit der Zahnstange verbundenen Getriebe mit der rotierenden Mutter und verschiebbarer Schraube gesichert wird.

Andere Lösungen nützen zur Rotationsbewegung des Schwenkarms ein spezielles Getriebe, gewöhnlich ein Schraubradgetriebe aus, das eine Rotationsbewegung des Schwenkarms des Abnehmers um eine feste mit einem Rad des Ausgleichsgetriebes, gewöhnlich Riemengetriebes verbundener Drehachse ermöglichen muss, wobei das Riemengetriebe eine ständig vertikale Stellung der Zange bei der Übertragung der Glashülle, ggf. bei der Rückkehr der Zange in die Endform sichern muss.

Nachteilig bei den bekannten Lösungen ist andererseits eine komplizierte Transformation der Rotation zur Verschiebung und zurück zur Rotation, und in den anderen Fällen eine Unmöglichkeit ein Standardgetriebe von den spezialisierten Herstellern zu verwenden, und deshalb ein Bedarf der Entwicklung der speziellen Getriebe mit der Sicherung von minimalen Spielen bei genügend langen Lebensdauer bei einer kontinuierlichen Glasformherstellung.

Der Erfindung liegt die Aufgabe zugrunde, die angeführten Nachteile zu beseitigen, mittels einer neuen Lösung von Mechanismus des Abnehmers einer Glasformmaschine mit einem Schwenkarm und einer in der Kreisbahn verschiebbaren und am gegenseitigen Ende des Schwenkarms zur seinen Drehachse aufhängten Zange, nach der Erfindung, bestehend darin, dass dessen Grund ein Kasten ist, an welchen von der Seite ein aus einem Getriebe und Servomotor bestehender Stellantrieb befestigt ist, wobei im niedrigen Teil des Kastens eine Buchse gelagert ist, in welche eine feste Achse des Abnehmerarms mit einer Nabe eingelegt ist, an welche die Zange des Abnehmers in abnehmbarer Weise befestigbar ist, wobei der Austritt des Stellantriebes eine Welle bildet, die ein erstes in das zweite mit dem Abnehmerarm fest verbundenen Zahnrad eingreifendes Zahnrad trägt.

Nach einem vorteilhaften Durchführungsbeispiel der Erfindung ist das durch das erste Zahnrad und das zweite Zahnrad gebildete Zahngetriebe in dem mit einem Deckel abgedeckten Kasten geschlossen.

Nach einem weiteren vorteilhaften Durchführungsbeispiel ist an die feste Achse klemmend und verschiebbar ein Hebel und eine in dem Hebeldeckel gelagerte Stellschraube angebracht ist, wobei der Hebeldeckel mit dem Hebel fest verbunden ist, bei einer angezogene Fixierschraube zum Kasten.

Nach einem weiteren vorteilhaften Durchführungsbeispiel trägt der Hebel einen an eine Regulierschraube angeknüpften Gewindezapfen, wobei die Regulierschraube in einem in einem Halter gestützten Druckzapfen gelagert ist, wobei der Halter am Kasten befestigt ist.

Die angeführte Lösung von Mechanismus des Abnehmers einer Glasformmaschine zur Übertragung der geformten Glashüllen aus der Endform auf die Abstellplatte nach der Erfindung bringt folgende Vorteile:
- Reduktion von Drehzahlen zwischen dem Antriebsservomotor und dem Abnehmerarm mit der Zange mittels des normalen Untersetzungsgetriebes;
- Möglichkeit der Anpassung von "Rahmen des Mechanismus" für verschiedene Maschinentype von den verschiedenen Herstellern ohne Bedarf einer Rekonstruktion des Grundmechanismus (in einem Sonderfall eine Möglichkeit der Ausbildung von Rahmen mit einem oberen Aufhängung in der Maschine);
- eine feine Einstellung der vertikalen Lage der Zange mit einer Fixierung der Einstellung spielfrei gegenüber dem Rahmen;
- Möglichkeit der Einstellung der Lage der Zange in die Achse der Station einer Reihenmaschine, d.h. senkrecht zur Ebene der Übertragung der geformten Glashülle aus der Endform auf die Abstellplatte;
- Möglichkeit der Ausnutzung der bestehenden Abnehmerarme mit der Zange für die neue Lösung des Servoabnehmers.

Die Erfindung wird besser erklärt anhand der Zeichnung wo es zeigen:

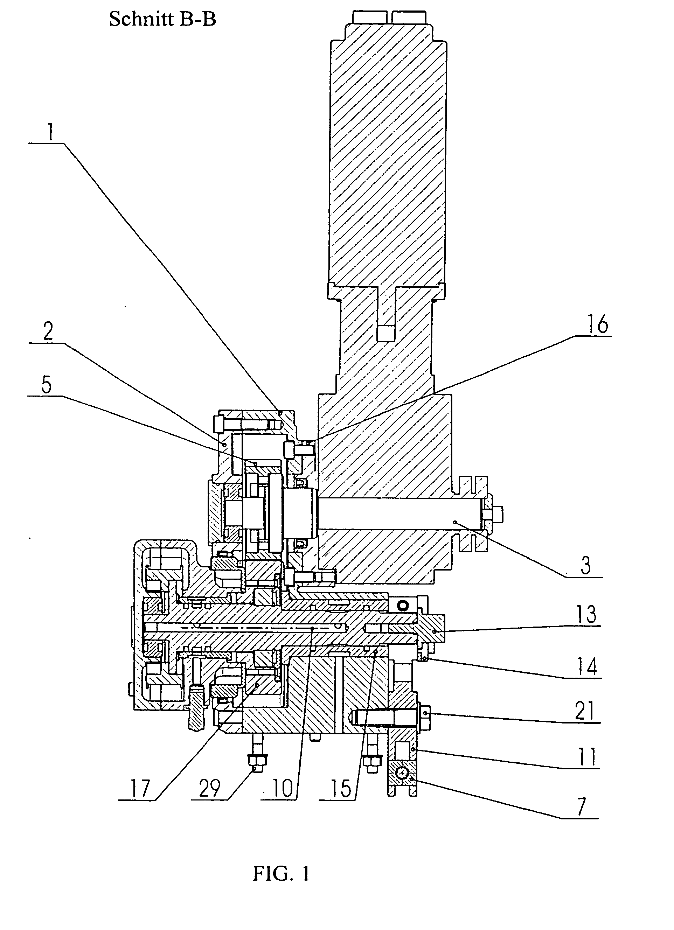

**Fig. 1** einen Schnitt durch die Drehachse des Abnehmerarms;

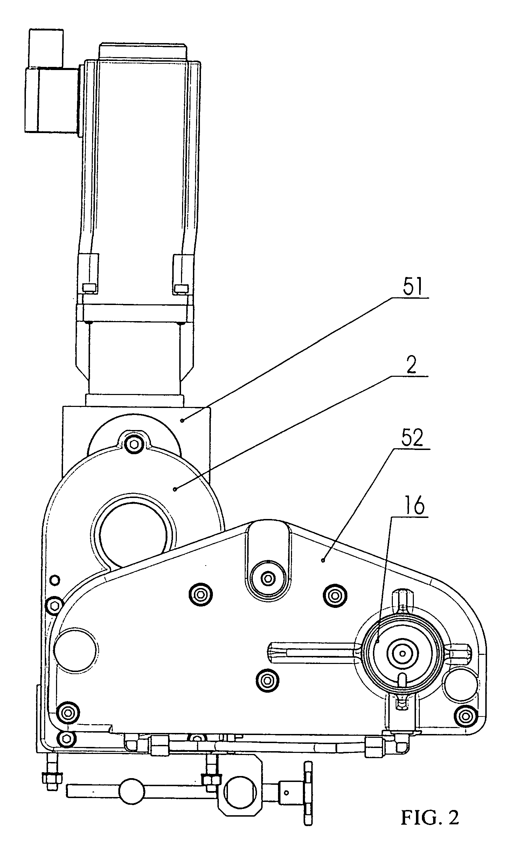

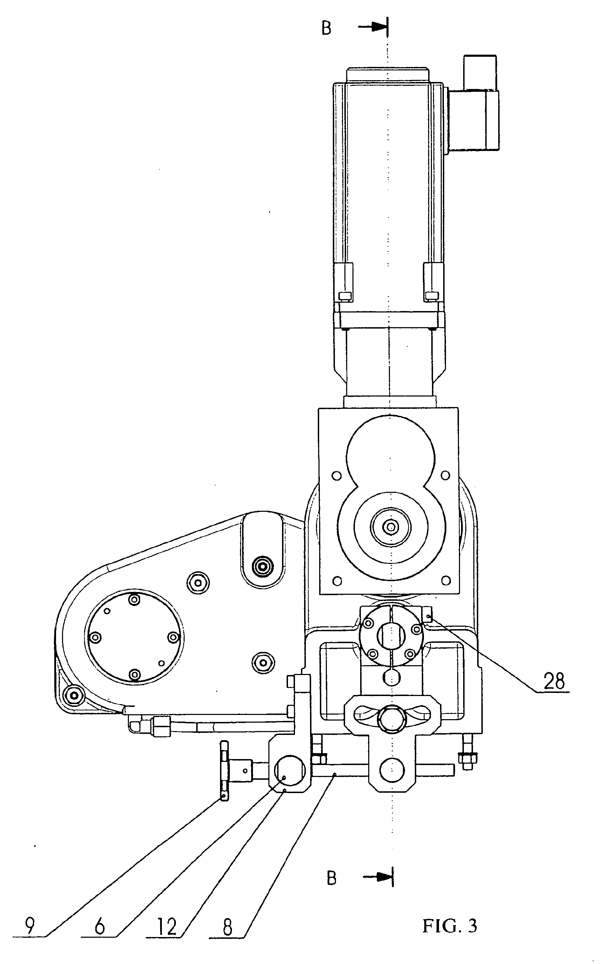

**Fig. 2 und 3** Seitenansichten;

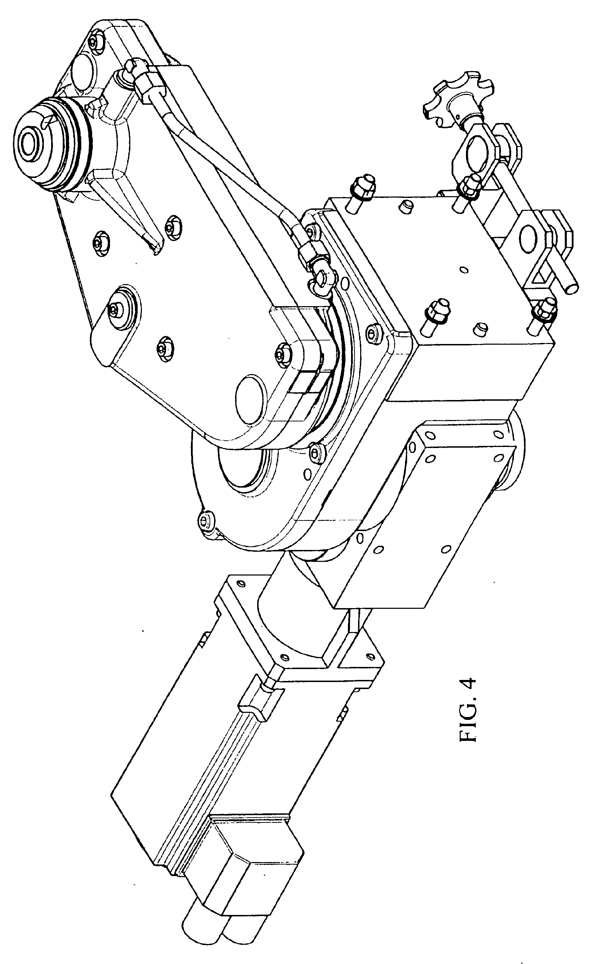

**Fig. 4** eine Ansicht in Axonometrie an den Mechanismus des Abnehmers ohne der Zange des Mechanismus und
**Fig. 5** eine schematische Darstellung mit der angeschlossenen Zange in der Bewegung zwischen zwei Grundstellungen, d.h. zwischen der Endform und des Abstellplatte.

Einen Grund des Mechanismus des Abnehmers stellt ein Kasten **1** dar, an welchen von der Seite ein aus einem Getriebe und Servomotor bestehender Stellantrieb **51** befestigt ist. Im niedrigen Teil des Kastens **1** ist eine Buchse **15** gelagert, in welche eine feste Achse **10** des Abnehmerarms **52** mit einer Nabe **16** der Zange **32** eingelegt ist, an welche die Zange **32** des Abnehmers in abnehmbarer Weise befestigt ist. Der Austritt des Stellantriebes **51** bildet eine Welle **3,** die ein erstes in das zweite mit dem Abnehmerarm **52** fest verbundene Zahnrad **17** eingreifendes Zahnrad **5** trägt.

Dieses Zahngetriebe ist in dem mit einem Deckel **2** abgedeckten Kasten **1** geschlossen. An die feste Achse **10** ist klemmend und verschiebbar ein Hebel **11** und eine in dem Hebeldeckel **14** gelagerte Stellschraube **13** angebracht, wobei der Hebeldeckel **14** mit dem Hebel **11** fest verbunden ist, bei einer angezogene Fixierschraube **21** zum Kasten **1.** Der Hebel **11** trägt einen an eine Regulierschraube **8** angeknüpften Gewindezapfen **7,** wobei die Regulierschraube **8** in einem in einem Halter **12** gestützten Druckzapfen **6** gelagert ist, wobei der Halter **12** am Kasten **1** befestigt ist.

Der niedrige Teil des Kastens **1** umfasst Befestigungsschrauben **29** für Anschließung eines nicht dargestellten Rahmens des nach der konkreten Ausführung der Reihenmaschine gebildeten Mechanismus des Abnehmers.

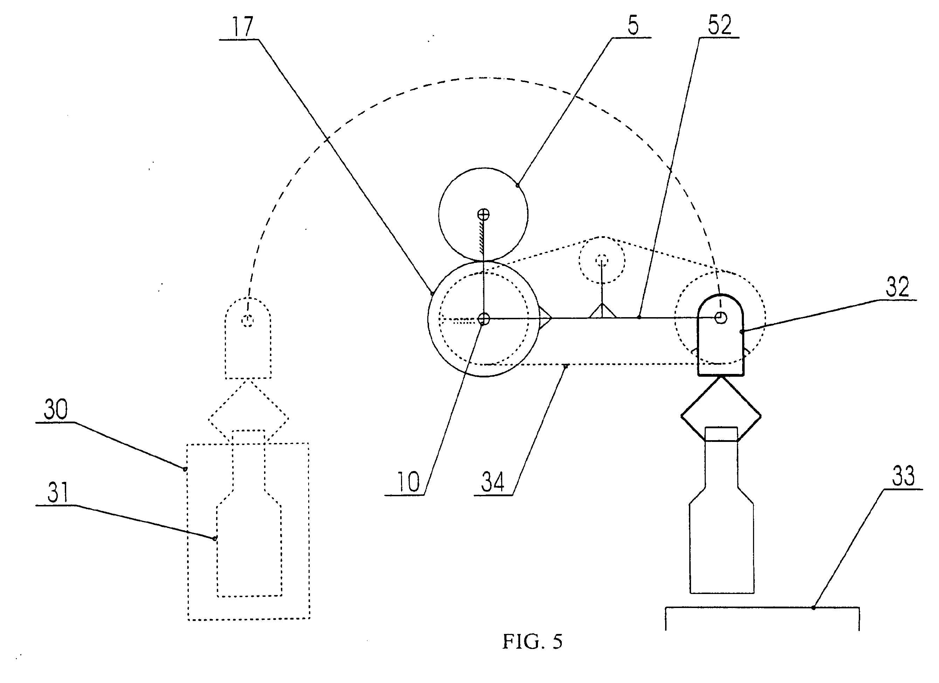

Nachfolgend wird die Funktion des Mechanismus des Abnehmers beschrieben. Der Mechanismus des Abnehmers ist in der Grundstellung mit dem Abnehmerarm **52** über der Endform **30,** wobei die an der Nabe **16** vertikal befestigte Zange **32** die Glashülle **31** fasst und verlegt sie in einer vertikalen Kreisbahn bei Umdrehung des Abnehmerarms **52** um 180° über die Abstellplatte **33,** wie diese Stellung Fig. 5 zeigt. Diese Bewegung und eine Rückbewegung von der Abstellplatte **33,** in der Richtung zur Endform **30** vermittelt der Stellantrieb **51** mit einer programmierten Steuerung des Servomotors mit dem das erste Zahnrad **5** angetriebenen Getriebe, wobei das erste Zahnrad **5** in das zweite mit dem Abnehmerarm **52** fest verbundenen Zahnrad **17** eingreift, wobei in dem Abnehmerarm **52** ein die vertikale Lage der Zange **32** sicherndes Ausgleichgetriebe **34** gelagert ist. Die Einstellung der Lage der Zange **32** in der Richtung der festen Achse **10** ermöglicht die Stellschraube **13** nach der Entspannung der Klemmschraube **28** des Hebels **11** gegenüber der festen Achse **10** und damit auch dem Kasten **1** bei der angezogenen Fixierschraube **21.** Die Einstellung der vertikalen Lage der Zange **32** kann man im Gegenteil nach der Entspannung der Fixierschraube **21** und durch Andrehung des Hebels **11** mittels der Regulierschraube **8,** welche auf den Gewindezapfen **7** im Hebel **11** und auf den Druckzapfen **6** im an dem Kasten **1** befestigten Halter **11** wirkt. Nach der Einstellung ist die eingestellte Lage der Zange **32** genau über der Mündung der Glashülle **31** in der Endform **30** mittels der Fixierschraube **21** fixiert, wodurch gesichert ist, dass die Übertragung der dynamischen abwechselnden Kräfte bei der Bewegung Abnehmerarms **52** in den Kasten **1** spielfrei verläuft und belastet nicht die Einstelleinrichtung, welche durch die Regulierschraube **8,** den Druckzapfen **6,** den Gewindezapfen **7** und den Halter **12** gebildet ist.

Die angeführte Lösung von Mechanismus des Abnehmers zur Übertragung der geformten Glashüllen aus der Endform auf die Abstellplatte, nach der Erfindung, bringt die Vorteile, welche vorne angegeben wurden.

### Liste der Bezugszeichen

- 1: Kasten
- 2: Kastendeckel
- 3: Welle
- 5: das erste Zahnrad
- 6: Druckzapfen
- 7: Gewindezapfen
- 8: Regulierschraube
- 10: feste Achse des Abnehmerarms
- 11: Hebel
- 12: Halter
- 13: Stellschraube
- 14: Hebeldeckel
- 15: Buchse (Futter)
- 16: Zangenabe
- 17: das zweite Zahnrad
- 21: Fixierschraube
- 28: Klemmschraube
- 29: Befestigungsschraube
- 30: Endform
- 31: Glashülle
- 32: Zange
- 33: Abstellplatte
- 34: Ausgleichsgetriebe
- 51: Stellantrieb
- 52: Abnehmerarm

## Patentansprüche

**4.** Mechanismus des Abnehmers einer Glasformmaschine nach Ansprüchen 1 und 2, **dadurch gekennzeichnet, dass** der Hebel (11) einen an eine Regulierschraube (8) angeknüpften Gewindezapfen (7) trägt, wobei die Regulierschraube (8) in einem in einem Halter (12) gestützten Druckzapfen (6) gelagert ist, wobei der Halter (12) am Kasten (1) befestigt ist.
